Europäisches Patentamt

**European Patent Office**

Office européen des brevets

(19)

(11) Publication number: **0 007 928**
**B1**

(12) **EUROPEAN PATENT SPECIFICATION**

(45) Date of publication of patent specification: **17.08.83**

(51) Int. Cl.³: **G 05 B 19/04, H 05 B 1/02**

(21) Application number: **78300273.6**

(22) Date of filing: **09.08.78**

(54) Heat control apparatus.

<table>
<tr><td>

(43) Date of publication of application:
**20.02.80 Bulletin 80/4**

(45) Publication of the grant of the patent:
**17.08.83 Bulletin 83/33**

(84) Designated Contracting States:
**CH DE FR GB NL SE**

(56) References cited:
**FR - A - 2 282 204**
**FR - A - 2 304 239**
**US - A - 3 293 406**
**US - A - 3 321 608**
**US - A - 3 479 487**
**US - A - 3 588 419**

</td><td>

(73) Proprietor: **Cress, Steven B.**
**1330 Desert Willow Lane**
**Diamond Bar California (US)**

(72) Inventor: **Cress, Steven B.**
**1330 Desert Willow Lane**
**Diamond Bar California (US)**

(74) Representative: **Wilson, Joseph Martin**
**WITHERS & ROGERS 4 Dyer's Buildings Holborn**
**London EC1N 2JT (GB)**

</td></tr>
</table>

Courier Press, Leamington Spa, England.

## Heat control apparatus

The present invention relates generally to an apparatus for controlling the electric current supplied to a heating element and, more particularly, to such an apparatus for use in an electric kiln adapted to fire ceramic ware.

There has recently been a substantial increase in popularity in the home manufacture, either as a hobby or in a small home business, of heat fired ceramic water. Consequently, a large market has developed for the sale of electric furnaces and kilns to the ceramic hobbyist and the like. One problem often associated with the use of such kilns is that the ceramic materials customarily used have a high thermal shock intolerance at low temperatures. Thus, the temperature in the kiln must be very gradually increased or the ceramic material being fired will fracture. This has often required that the operator be close to the kiln over the entire heating cycle so that he could manually increase the temperature at a gradual rate. The inconvenience to the operator associated with such a procedure is apparent.

Several devices have been proposed in the past to automatically increase the temperature in the kiln at a gradual rate to relieve the operator of the need to manually attend to the kiln. In general, however, such devices utilize relatively expensive electronic or mechanical components which make their price prohibitively high for home use. For example, U.S. Patent Nos. 3,814,902 to Fann and 3,315,891 to Allen disclose heat control devices comprising a periodic on-off controller which supplies current to the heating element of the kiln. A thermocouple for sensing the temperature inside the kiln is connected to the controller. Both Allen and Fann, *supra*, utiize additional complex circuitry which produces a signal that is combined with that of the thermocouple to fool the controller into sensing an initial temperature in the kiln that is higher than the actual temperature so that the controller does not provide a high heat output at the beginning of the heating cycle. Gradually the additional signal produced by the circuitry diminishes to zero to provide a gradual increase in the temperature in the kiln. A disadvantage of these devices is the need for relatively expensive timing circuits, variable potentiometers and other electrical elements.

U.S. Patent No. 3,855,452 to Flasza et al discloses another control system for a ceramic kiln which again utilizes quite expensive solid-state timing circuits and logic blocks. Moreover, the use of such solid-state circuits in a control system mounted on or near a ceramic kiln is disadvantageous since such circuits are temperature sensitive and may degrade under the operating temperatures achieved by the kiln. U.S. Patent No. 1,861,472 to Glitzke discloses a device for gradually increasing the temperature in a furnace comprising a clock motor which progressively cuts out sections of a variable resistance element to thereby increase the electric current being supplied to the heating element. However, such a variable resistance element is often expensive and prone to failure.

French Patent Application No. 2,304,239 discloses an oven having two heating elements, one connected in a feedback loop with a thermostat and another connected to a pulse controller having contacts actuated by a bimetallic strip timing device. This specification is concerned with producing an oven in which the vertical temperature distribution can be varied according to culinary requirements.

U.S. Patent No. 3,588,419 discloses a temperature control device comprising a periodic on-off controller which supplies heating current to the resistive heating element of a furnace. This circuit like that of Allen (mentioned above) uses additional complex circuitry producing an electrical signal which is combined with that of a thermocouple to provide feedback from the control environment. A reference potentiometer provides one of the signals to the controller and the potentiometer is controlled by a motor which is in turn controlled by a fixed frequency oscillator. This oscillator thus defines a constant rate of temperature increase in the furnace regardless of changing heat requirements of the articles to be heated. In addition it uses relatively expensive electronic timing circuits, potentiometers and other electrical components which render it unsuitable for incorporation in kilns for home manufacture of ceramics.

Accordingly, it is an object of the present invention to provide a heat control apparatus for gradually increasing the temperature in a kiln or the like which is reliable and of extremely low cost, and thus suitable for home use.

This and other objects of the present invention are accomplished by providing an automatic heat control apparatus in which a periodic on-off controller for supplying current to an electrical heating element is coupled to motor means for automatically actuating adjustment means of the controller over a predetermined time period to gradually increase the duration of the on interval relative to the off interval thereby to control the rate of temperature increase produced by the heating element, the motor means being the sole means for automatically actuating the adjustment means, and wherein the controller includes a thermal-mechanical timing mechanism responsive to fluctuations of electric current or voltage applied to the heating element.

The invention will now be described by way of example with reference to the drawings in which:—

Figure 1 is a diagrammatic view of a first embodiment of an automatic heat control apparatus according to the present invention; and

Figure 2 is a diagrammatic view of a second embodiment of an automatic heat control apparatus according to the present invention.

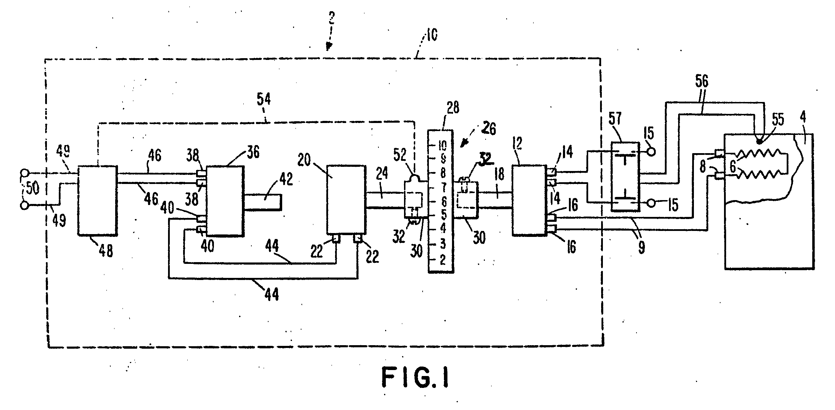

An automatic kiln heat control apparatus or unit 2 according to a first embodiment of the present invention is diagrammatically illustrated in Figure 1. Control unit 2 suitably supplies electric current to a conventional electric kiln or furnace 4 having electrical resistance heating elements 6 ending in terminals 8 which are connected by conductors 9 to control unit 2. Control unit 2 is particularly adapted for use with kilns 4 meant for home use by a hobbyist or in a small business. However, unit 2 is not limited for use with such kilns, but may be used to control the rate of temperature increase in any type of electric heating element.

Control unit 2 comprises a suitably shaped housing or enclosure 10 which contains therein the various elements of unit 2. Control unit 2 further includes a first power controller 12 of the periodic on-off type. Controller 12 has input terminals 14 connected to the terminals 15 of an AC voltage source, and output terminals 16 connected to the kiln heating elements 6 by conductors 9. In addition, controller 12 has a rotatable adjusting shaft 18 for changing the duration of the on interval relative to the off interval in controller 12 as described hereafter.

Controller 12 is preferably a Robertshaw Infinite Control, Models Nos. INF24031B, INF12032B or their equivalent. Basically, these power controllers have a plurality of cycles each comprising an on interval during which the controller passes current through the unit to its output terminals and an off interval during which no current is allowed to pass through the unit. Such controllers mechanically comprise a bimetallic control arm having a heater wrapped therearound which is energized whenever power passes through the unit during the on interval. A magnet normally holds the control arm engagement with an electrical contact allowing the current to pass through the unit from the voltage source to the output terminals. However, as the heater heats the bimetallic control arm during the on interval, the control arm will begin to flex and build up forces which finally overcome the pull of the magnet causing the control arm to break the contact and prevent the passage of current through the unit. Thus, the unit moves into its off interval until such time as the bimetallic control arm cools and the magnetic pull is reasserted thereon to reestablish contact and begin the next on interval. Shaft 18 of controller 12 has a cam engagement with the bimetallic control arm for changing the unbiased position of such control arm relative to the contact to thereby adjust the duration of the on and off intervals relative to one another.

Control unit 2 further comprises a continuous speed AC electric timing motor 20 having terminals 22 for connection to a power source and a rotatable output shaft 24. Motor 20 and controller 12 are suitably supported and arranged inside enclosure 10 so that output shaft 24 and adjusting shaft 18 are oriented towards one another and spaced a suitable distance apart. An integrally molded thumbwheel 26 having a circular wheel portion 28 and two hollow sleeves 30 extending from either side thereof is rotatably supported inside enclosure 10 and is arranged between motor 20 and controller 12. Adjusting shaft 18 is inserted into one of the hollow sleeves 30 and secured thereto by a setscrew 32 contacting a flat portion on shaft 18. Similarly, output shaft 24 is inserted into the other hollow sleeve 30 and secured thereto by a setscrew 32. The outer surface of wheel portion 28 of thumbwheel 26 suitably extends through the surface of enclosure 10 and has appropriate indicia printed thereon to visually indicate to the operator the level of heating taking place in kiln 4. Moreover, since thumbwheel 26 extends through the surface of enclosure 10, it may be manually rotated by the operator to override the control unit 2 as will be explained in more detail hereafter.

A second power controller 36 having input terminals 38, output terminals 40 and a rotatable adjusting shaft 42 is supported inside enclosure 10 with shaft 42 protruding to the outside of enclosure 10 where it may be manually rotated. Controller 36 is a periodic on-off controller of the same type as controller 12. Output terminals 40 of controller 36 are connected by conductors 44 to terminals 22 of motor 20. In addition, input terminals 38 of controller 36 are connected by conductors 46 to a limit switch 48. Limit switch 48 is connected by conductors 49 to the terminals 50 of a conventional AC power source. Power source 50 may be the same source as power source 15 or it may be a different source as illustrated herein. In any event, sources 15 and 50 comprise conventional 110 VAC or 220 VAC house current.

A cam 52 is integrally formed on the outer surface of one of the hollow sleeves 30 of thumbwheel 26. Cam 52 has a mechanical connection 54 with limit switch 48 controlling the application of power to controller 36 as will be described hereafter. Although cam 52 and switch 48 have been shown in Figure 1 for the purpose of illustration as separated inside enclosure 10, they preferably are positioned adjacent one another so that cam 52 directly actuates switch 48 without any intervening linkage. For example, switch 48 could include a spring-biased button which is directly actuated by cam 52 to open switch 48 whenever thumbwheel 26 reaches a certain angular position inside enclosure 10.

A temperature sensing element 55 is included inside kiln 4 and is connected by conductors 56 to an on-off control unit 57 that is connected in series in the conductors connecting voltage source 15 to controller 12. Whenever the temperature sensing element 55 detects that a sufficient temperature has been reached inside kiln 4 to complete proper firing of the ceramic ware, it activates control unit 57 through conductors 56 to disconnect controller 12 from power source 15. Kiln 4 will then slowly cool down to ambient temperature. Sensing element 55 and control unit 57 may comprise a Dawson kiln sitter or its equivalent.

In the operation of the automatic heat control unit 2, first power controller 12 is energized by either a 110 or 220 volt power source 15 for supplying current to heating elements 6. Thumbwheel 26 is initially rotated to a zero position, as indicated by the indicia on wheel portion 28, where adjusting shaft 18 is so positioned that the on interval of controller 12 has its minimum duration. As power is applied to second controller 36 through limit switch 48, controller 36 will intermittently energize motor 20 in accordance with whatever duration of on interval has been selected by the rotation of adjusting shaft 42. Thus, motor 20 intermittently rotates adjusting shaft 18 through thumbwheel 26 such that the duration of the on interval of controller 12 is intermittently increased while the duration of the off interval is intermittently decreased to provide a time proportional increase in the amount of electric current applied by controller 12 to heating elements 6 to slowly increase the temperature in kiln 4. Finally, when motor 20 has rotated shaft 18 to its maximum position where the duration of the on interval in controller 12 is continuous, cam 52 is so positioned to energize limit switch 48 thereby stopping the flow of power to the first controller 36 and stopping further rotation of motor 20. Therefore, automatic heat control unit 2 will be at its maximum full on position only after a predetermined time period during which shaft 18 is slowly and intermittently rotated by motor 20.

After controller 12 has operated a sufficient length of time in its full on position to increase the temperature in kiln 4 and the ceramic objects therein are properly fired, temperature sensing element 55 disconnects power supply 15 from controller 12. When kiln 4 has cooled down sufficiently to allow safe handling of the products therein, the operator may remove the ceramic ware from kiln 4 and reset control unit 2 for another cycle of operation by rotating thumbwheel 26 back to its zero position. As compared to other kiln heat control units, control unit 2 of the present invention has an extremely low cost because it utilizes elements, such as time proportional power control units 12 and 36, which are extremely inexpensive and readily available. Control unit 2 does not utilize expensive variable reostats to gradually increase the current applied to the heating elements 6, but rather merely applies a constant current to the heating elements through power controller 12 and only adjusts the proportion of the on time versus the off time.

The rate at which the temperature is increased in kiln 4 can be varied within wide limits by adjusting the average speed of rotation of motor 20. Although motor 20 is not a variable speed motor which is more expensive than the constant speed motor 20 used herein, its average speed can still be varied by adjusting the duration of the on interval relative to the off interval in second controller 36. Thus, by manually rotating shaft 42, which suitably protrudes through enclosure 10, so that the duration of the on interval in controller 36 increases, the average speed of rotation of motor 20 will increase thereby increasing the rotation of shaft 18 and causing a faster rise in temperature in kiln 4. Conversely, by rotating shaft 42 to decrease the duration of the on interval in controller 36, the average speed of rotation of motor 20 will decrease thereby causing a slower rate of temperature increase in kiln 4. In addition, the operator may override motor 20 to turn the heating level of control unit 2 up or down by manually rotating thumbwheel 26 in one direction or the other.

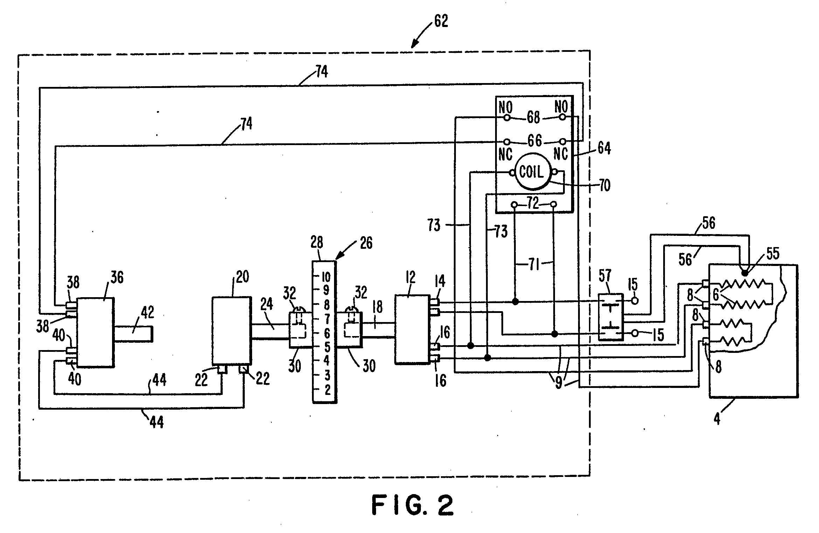

Referring now to Figure 2, a second embodiment 62 of an automatic heat control unit according to the present invention is diagrammatically illustrated with similar reference numerals being applied to elements in unit 62 which are identical to corresponding elements in control unit 2. Generally, control unit 62 comprises all the elements of control unit 2 except that the mechanically actuated limit switch 48 for controllimg the power input to second power controller 36 has been replaced by an electrical relay switch 64 having a set of normally closed contacts 66 and a set of normally open contacts 68. In addition, relay 64 has a coil 70 and an auxiliary pair of terminals 72 for connection to voltage source 15 by conductors 71. Coil 70 is connected by conductors 73 to the output terminals 16 of first power controller 12. Coil 70 will therefore be intermittently energized when controller 12 is intermittently energized during its on interval.

Input terminals 38 of second controller 36 are connected by conductors 74 to the normally closed contacts 66 of relay 64. When controller 12 is in an on interval thereby energizing coil 70 through conductors 73, normally closed contacts 66 supplying the electrical power to controller 36 will be opened thereby disabling controller 36 from energizing motor 20. When controller 12 has reached a full on position so that coil 70 is continuously energized, then normally closed contacts 66 will be continuously opened thereby continuously disabling motor 20 from running in the same manner as limit switch 48. In addition, normally open contacts 68 in relay 64 can be connected to additional heating elements 6 inside kiln 4 via conductors 9 if it is desired to supply additional electric power from the two auxiliary terminals 72 in relay 64. Contacts 68 would be used whenever the amperage requirements of elements 6 exceed the capacity of controller 12 by itself which is approximately 15 amps. However, contacts 68 are still controlled by controller 12 since they will be closed only whenever coil 70 is energized by controller 12 during its on interval. Relay 64 may be a Potter and Brumfield Model No. PR11AYO relay or its equivalent.

Although second controller 36 is shown in Figure 1 as being energized from power source 50, it could be energized through a feedback relationship with first controller 12. In such an event, conductors 49 would be connected to output terminals 16 of controller 12. Current would thus be applied to controller 36 during the on intervals of controller 12 which are at a minimum when control unit 2 is first turned on and continually increase until they are of constant duration. Thus, the amount of current delivered by controller 36 to motor 20 will be gradually increased over time so that motor 20 has a minimum average speed when unit 2 has just started and kiln 4 is cold and a maximum average speed only after kiln 4 has been heated to some degree. Such an arrangement further lessens the risk of breaking the ceramic material being fired in kiln 4. Control unit 62 shown in Figure 2 also illustrates a feedback relationship between controllers 12 and 36 through relay 64. However, relay 64 causes current to be applied to controller 36 in an inverse manner to that just described, i.e., average speed of motor 20 will be greatest when unit 62 is first turned on and the intervals of controller 12 are of minimum duration. Although such a feedback arrangement is not quite as advantageous as the former alternative described for control unit 2, the control unit 62 will still give good results in controlling the heating of kiln 4.

Although the present invention has been illustrated in terms of two preferred embodiments, it will be obvious to one of ordinary skill in the art that numerous modifications may be made without departing from the scope of the invention. For example, controller 12 and/or controller 36 may have a pilot light connected in parallel with the input terminals thereof to visually indicate that power is being supplied to the heat control unit. However, such pilot lights are not necessary to the present invention whose scope, therefore, is to be limited only by the appended claims.

## Claims

1. An automatic heat control apparatus for use with an electric heating element (6), comprising a power controller (12) having a plurality of timing cycles, each cycle comprising an on interval during which the controller (12) supplies electrical current to the heating element (6) and an off interval during which the controller (12) supplies no current to the heating element (6), the controller (12) further having means for adjusting the duration of the on interval relative to the off interval for each cycle, characterised in that the adjusting means is operatively coupled to a motor means (20) for automatically actuating the adjusting means over a predetermined time period to gradually increase the duration of the on interval relative to the duration of the off interval to control the rate of temperature increase produced by the heating element (6), the motor means (20) being the sole means for automatically regulating the adjusting means, and in that the controller (12) includes a thermal-mechanical timing mechanism responsive to fluctuations of electric current or voltage applied to the heating element (6).

2. An apparatus according to claim 1, wherein the motor means (20) is mechanically connected to the adjusting means.

3. An apparatus according to claim 2, further including means (26) to manually override the motor means (20).

4. An apparatus according to claim 1, wherein the motor means (20) comprises an electric motor having a rotatable output shaft (24), the adjusting means comprises a rotatable adjusting shaft (18) extending outwardly from the controller (12), and further including a mechanical connection (30) coupling the output and adjusting shafts for joint rotation thereof.

5. An apparatus according to claim 4, wherein the mechanical connection (3) comprises a thumbwheel (28) having two hollow sleeves extending respectively from opposite sides thereof, the output and adjusting shafts each being received in and secured to one of the sleeves.

6. An apparatus according to claim 5, wherein the thumbwheel (28) is adapted to be manually rotated to override the electric motor.

7. An apparatus according to claim 1, wherein the motor means (20) comprises a motor having a selectively variable average speed.

8. An apparatus according to claim 7, wherein said motor means (20) comprises a conshant speed electric motor, and further including a second power controller (36) having a plurality of driving cycles, each of the driving cycles comprising an on interval during which the second controller supplies a driving current from a voltage source to the motor and an off interval during which the second controller supplies no driving current to the motor, and means (42) for selectively adjusting the duration of the on interval of the second controller relative to the off interval thereof to vary the average speed of the motor.

9. An apparatus according to claim 8, further including means for uncoupling the second controller (36) from the voltage source when the on interval of the first mentioned controller (12) is of continuous duration.

10. An apparatus according to claim 9, wherein the uncoupling means comprises a mechanically actuated limit switch (48) interposed between the second controller (36) and the voltage source.

11. An apparatus according to claim 9, wherein the uncoupling means comprises an electrical relay (64) connected between the second controller (36) and the voltage source.

12. An apparatus according to claim 7, wherein the second controller (36) is connected in a feedback relationship with the first controller (12) such that current is supplied to the second controller in a time varying manner responsive to the first controller.

13. An apparatus according to claim 12, wherein the second controller (36) is supplied with current during the on intervals of said first controller (12).

## Revendications

1. Appareil de contrôle de chauffage automatique pour élément de chauffage électrique (6), comprenant un contrôleur de puissance (12) présentant un certain nombre de cycles de temporisation, chaque cycle comprenant un intervalle de marche pendant lequel le contrôleur (12) alimente en courant électrique l'élément de chauffage (6), et un intervalle d'arrêt pendant lequel le contrôleur (12) ne fournit aucun courant à l'élément de chauffage (6), le contrôleur (12) comportant en outre des moyens de réglage de la durée de l'intervalle de marche par rapport à l'intervalle d'arrêt dans chaque cycle, appareil caractérisé en ce que les moyens de réglage sont associés en fonctionnement à des moyens moteurs (20) destinés à actionner automatiquement les moyens de réglage pendant une période de temps prédéterminée pour augmenter progressivement la durée de l'intervalle de marche par rapport à la durée de l'intervalle d'arrêt, de manière à contrôler le rythme d'augmentation de température produit par l'élément de chauffage (6), les moyens moteurs (20) étant les seuls moyens de régulation automatique des moyens de réglage; et en ce que le contrôleur (12) comporte un mécanisme de temporisation thermomécanique répondant aux fluctuations du courant ou de la tension électriques appliquées à l'élément de chauffage (6).

2. Appareil selon la revendication 1, caractérisé en ce que les moyens moteurs (20) sont reliés mécaniquement aux moyens de réglage.

3. Appareil selon la revendication 2, caractérisé en ce qu'il comprend en outre des moyens (26) permettant de prédominer manuellement sur les moyens moteurs (20).

4. Appareil selon la revendication 1, caractérisé en ce que les moyens moteurs (20) comprennent un moteur électrique muni d'un arbre de sortie rotatif (24), les moyens de réglage comportant un arbre de réglage rotatif (18) faisant saillie à l'extérieur du contrôleur (12), et en outre une liaison mécanique (30) reliant les arbres de sortie et de réglage pour obtenir une rotation solidiare de ceux-ci.

5. Appareil selon la revendication 4, caractérisé en ce que le liaison mécanique (3) comprend une roue moletée (28) munie de deux manchons creux faisant saillie respectivement sur ses deux côtés opposés, les arbres de sortie et de réglage se logeant et se fixant chacun dans l'un des manchons.

6. Appareil selon la revendication 5, caractérisé en ce que la roue moletée (28) est conçue pour qu'on puisse la faire tourner à la main se substituant au moteur électrique.

7. Appareil selon la revendication 1, caractérisé en ce que les moyens moteurs (20) comprennent un moteur à vitesse moyenne sélectivement variable.

8. Appareil selon la revendication 7, caractérisé ence que les moyens moteurs (20) comprennent un moteur électrique à vitesse constante, l'appareil comprenant en outre un second contrôleur de puissance (36) présentant un certain nombre de cycles d'entraînement, chacun de ces cycles d'entraînement comprenant un intervalle de marche pendant lequel le second contrôleur fournit au moteur un courant d'entraînement provenant d'une source de tension, et un intervalle d'arrêt pendant lequel le second contrôleur ne fournit aucun courant au moteur, et des moyens (42) étant prévus pour régler sélectivement la durée de l'intervalle de marche du second contrôleur par rapport à l'intervalle d'arrêt de celui-ci, en vue de faire varier la vitesse moyenne du moteur.

9. Appareil selon la revendication 8, caractérisé en ce qu'il comprend en outre des moyens pour débrancher le second contrôleur (36) de la source de tension lorsque l'intervalle de marche du premier contrôleur (12) est de durée permanente.

10. Appareil selon la revendication 9, caractérisé en ce que les moyens pour débrancher le second contrôleur comprennent un interrupteur de limite à commande mécanique (48) interposé entre le second contrôleur (36) et la source de tension.

11. Appareil selon la revendication 9, caractérisé en ce que les moyens pour débrancher les second contrôleur comprennent un relais électrique (64) branché entre le second contrôleur (36) et la source de tension.

12. Appareil selon la revendication 7, caractérisé en ce que le second contrôleur (36) est monté dans une boucle de rétroaction avec le premier contrôleur (12), de telle façon que le courant soit fourni a second contrôleur de manière variable dans le temps en fonction du premier contrôleur.

13. Appareil selon la revendication 12, caractérisé en ce que le second contrôleur (36) est alimenté en courant pendant les intervalles de marche du premier contrôleur (12).

## Patentansprüche

1. Selbsttätiges Heizungssteuergerät für die Verwendung mit einem elektrischen Heizelement (6), mit einer Leistungssteuereinheit (12) mit einer Vielzahl von Taktzyklen, von denen jeder Zyklus ein "Ein"-Intervall, während dessen Dauer die Steuereinheit (12) elektrischen Strom zum Heizelement (6) zuführt, sowie ein "Aus"-Intervall umfaßt, während dessen Dauer die Steuereinheit (12) keinen Strom zum Heizelement (6) zuführt, wobei die Steuereinheit (12) außerdem eine Einrichtung zum Einstellen der Dauer des "Ein"-Intervalls relativ zum "Aus"-Intervall für jeden Zyklus aufweist, dadurch gekennzeichnet, daß die Einstelleinrichtung wirkungsmäßig mit einer Motoreinrichtung (20) gekuppelt ist, um die Einstelleinrichtung über einen vorbestimmten Zeitraum selbsttätig zu betätigen, um für das Steuern der Rate der durch das Heizelement (6) erzeugten Temperaturerhöhung die Dauer des "Ein"-Intervalls relativ zur Dauer des "Aus"-Intervalls nach und nach zu verlängern, wobei die Motoreinrichtung (20) das einzige Mittel zur selbsttätigen Steuerung der Einstelleinrichtung ist, und daß die Steuereinheit (12) einen thermomechanischen Zeitgebermechanismus aufweist, der auf Änderungen des dem Heizelement (6) zugeführten elektrischen Stroms oder der Spannung anspricht.

2. Gerät nach Anspruch 1, bei dem die Motoreinrichtung (20) mechanisch mit der Einstelleinrichtung verbunden ist.

3. Gerät nach Anspruch 2 mit einer zusätzlichen Einrichtung (26) für manuelles Übersteuern der Motoreinrichtung (20).

4. Gerät nach Anspruch 1, bei dem die Motoreinrichtung (20) einen Elektromotor mit einer drehbaren Ausgangswelle (24) aufweist, die Einstelleinrichtung eine drehbare Einstellwelle (18) besitzt, die sich aus der Steuereinheit (12) nach außen erstreckt, und außerdem eine mechanische Verbindung (30) vorgesehen ist, die die Ausgangswelle und die Einstellwelle für ihre gemeinsame Drehbewegung miteinander kuppelt.

5. Gerät nach Anspruch 4, bei dem die mechanische Verbindung (30) einen Einstellknopf (28) aufweist, der zwei hohle Hülsen besitzt, die sich von einander entgegengesetzten Seiten desselben weg erstrecken, wobei die Ausgangswelle und die Einstellwelle in je einer der Hülsen aufgenommen und darin befestigt sind.

6. Gerät nach Anspruch 5, bei dem der Einstellknopf (28) dazu bestimmt ist, um für das Übersteuern des Elektromotors manuell gedreht zu werden.

7. Gerät nach Anspruch 1, bei dem die Motoreinrichtung (20) einen Motor mit wahlweise veränderbarer durchschnittlicher Drehzahl aufweist.

8. Gerät nach Anspruch 7, bei dem die Motoreinrichtung (20) einen Elektromotor für konstante Drehzahl aufweist und außerdem eine zweite Leistungssteuereinheit (36) mit einer Vielzahl von Antriebszylken vorgesehen ist, von denen jeder Antriebszyklus ein "Ein"-Intervall, während dessen Dauer die zweite Steuereinheit einen Antriebsstrom von einer Spannungsquelle zu dem Motor zuführt, sowie ein "Aus"-Intervall umfaßt, während dessen Dauer die zweite Steuereinheit einen Antriebsstrom zu dem Motor zuführt, und mit Mitteln (42) zum wahlweisen Einstellen der Dauer des "Ein"-Intervalls der zweiten Steuereinheit relativ zu dem "Aus"-Intervall derselben, um die durchschnittliche Drehzahl des Motors zu verändern.

9. Gerät nach Anspruch 8 mit einer zusätzlichen Einrichtung zum Trennen der zweiten Steuereinheit (36) von der Spannungsquelle, wenn das "Ein"-Intervall der ersterwähnten Steuereinheit (12) von ununterbrochener Dauer ist.

10. Gerät nach Anspruch 9, bei dem die Einrichtung zum Trennen einen mechanisch betätigten Endschalter (48) aufweist, der zwischen die zweite Steuereinheit (36) und die Spannungsquelle geschaltet ist.

11. Gerät nach Anspruch 9, bei dem die Einrichtung zum Trennen ein elektrisches Relais (64) aufweist, das zwischen die zweite Steuereinheit (36) und die Spannungsquelle geschaltet ist.

12. Gerät nach Anspruch 7, bei dem die zweite Steuereinheit (36) in Rückkopplungsbeziehung zur ersten Steuereinheit (12) geschaltet ist, so daß Strom zur zweiten Steuereinheit in zeitlich veränderlicher Weise in Abhängigkeit von der ersten Steuereinheit zugeführt wird.

13. Gerät nach Anspruch 12, bei dem die zweite Steuereinheit (36) während der "Ein"-Intervalle der besagten ersten Steuereinheit (12) mit Strom versorgt wird.

FIG.1

FIG. 2

2